# EUROPEAN PATENT APPLICATION

(11) **EP 4 273 997 A1**
(43) Date of publication of application: **08.11.2023**
(21) Application number: 22171664.0
(22) Date of filing: 04.05.2022
(51) Int. Cl.: H01M 10/42, H01M 10/48, H01M 10/613, H01M 10/63, H01M 10/6551, H01M 10/6554, H01M 10/6563, H01M 50/503, H01M 50/519, H01M 50/507

(54) **A BATTERY STACK WITH A THERMAL POWER DISSIPATION SYSTEM**

(71) Applicant: Advanced Digital Broadcast S.A., 1293 Bellevue (CH)
(72) Inventor: GASPEROWICZ, Henryk, 65-119 Zielona Gora (PL); POPIELARSKI, Damian, 65-119 Zielona Gora (PL)
(74) Representative: Kancelaria Eupatent.pl Sp. z.o.o

(57) **Abstract**

A battery stack comprising: a plurality of batteries (40) arranged adjacently to each other; and bus bars (10) having contact feet (12, 14) at their ends, for connecting the bus bar (10) to poles of the batteries (40); wherein each bus bar (10) connects two poles of two adjacent batteries (40), such as the bus bars (10) form electrical connection between the batteries (40) within the battery stack. At least one battery has connected thereto a battery management system (BMS) (30), for controlling and local optimization of battery charging and discharging parameters, coupled via a contact area (31) to one of its poles (41) such that the contact area (31) of the battery management system (30) is located between the pole (41) of the battery and the contact foot (12) of the bus bar (10), and wherein the BMS (30) comprises a temperature sensor (33) thermally coupled with the contact area (31). At least one bus bar (10) connected to the battery (40) with the BMS (30) comprises a heat sink having an extended surface (11) coupled with a cooling fan (20), and wherein the BMS (30) has a power outlet (34) connected to power the cooling fan (20) and configured to deliver power to the cooling fan (20) depending on the temperature measured by the temperature sensor (33).

## Description

### TECHNICAL FIELD

The present invention relates to a battery stack with a thermal power dissipation system.

### BACKGROUND

During exploitation (charging and discharging), batteries dissipate heat. This phenomenon is caused by a non-zero internal resistance of the battery, over which the flowing current generates power losses directly converted into heat. The problem of heat dissipation is significantly bigger when the batteries are assembled in a stack. In particular, the batteries located in the center of the stack have a smaller heat dissipation area then the batteries at the edges. Excessive heat accumulation may damage the batteries, shorten their lifespan or may even cause their explosion.

Therefore the temperature of the batteries in the battery stack has to be monitored and maintained at a safe level. Maintaining the temperature of the battery at a safe level may be performed by surface cooling or tab cooling.

The battery cells are made of multiple layers located in a single pouch. In case of the surface cooling the outer layers of the battery cells are cooled faster than the inner layers. As a result the inner layers of the cell may become overheated and the overall efficiency of the battery is decreased. Since most of the heat generated by the battery cell is flowing to the tabs of the battery, the tab cooling becomes more efficient when compared to surface cooling. Moreover the tab cooling allows to maintain more homogeneous temperature distribution within the battery cell, which enhances the battery lifespan and efficiency.

### SUMMARY OF THE INVENTION

There is a need to provide a battery stack with a thermal power dissipation system with improved thermal dissipation.

According to the present invention, there is provided a battery stack comprising: a plurality of batteries arranged adjacently to each other; and bus bars having contact feet at their ends, for connecting the bus bar to poles of the batteries; wherein each bus bar connects two poles of two adjacent batteries, such as the bus bars form electrical connection between the batteries within the battery stack. At least one battery has connected thereto a battery management system, for controlling and local optimization of battery charging and discharging parameters, coupled via a contact area to one of its poles such that the contact area of the battery management system is located between the pole of the battery and the contact foot of the bus bar, and wherein the BMS comprises a temperature sensor thermally coupled with the contact area. At least one bus bar connected to the battery with the BMS comprises a heat sink having an extended surface coupled with a cooling fan, and wherein the BMS has a power outlet connected to power the cooling fan and configured to deliver power to the cooling fan depending on the temperature measured by the temperature sensor.

Preferably, the contact area has a shape of a circle having an area larger than the area of the foot of the bus bar such that the temperature sensor is coupled with the region of the contact area that extends over the area of the foot of the bus bar.

Preferably, the contact area has a shape of a polygon with a projection extending over the area of the foot of the bus bar such that the temperature sensor is coupled with the projection.

The invention provides efficient heat dissipation via the bus bars, as the fan increases the efficiency of heat exchange between the extended area of the bus bars and surrounding air. The fan is powered from a BMS located next to the bus bar, therefore the power cable is mounted locally and is short. The temperature sensor is positioned at a location that allows accurate measurement and quick detection of the moment at which heat is produced and shall be dissipated by activating the fan.

### BRIEF DESCRIPTION OF DRAWINGS

The present invention is shown by means of preferable embodiments in a drawing, wherein:
Fig. 1 presents a battery stack with a thermal power dissipation system according to the invention;
Fig. 2 presents connection details of the poles of the neighbouring batteries;
Fig. 3 presents an exemplary battery management system board;
Fig. 4 presents simplified electric circuit of the battery management system;

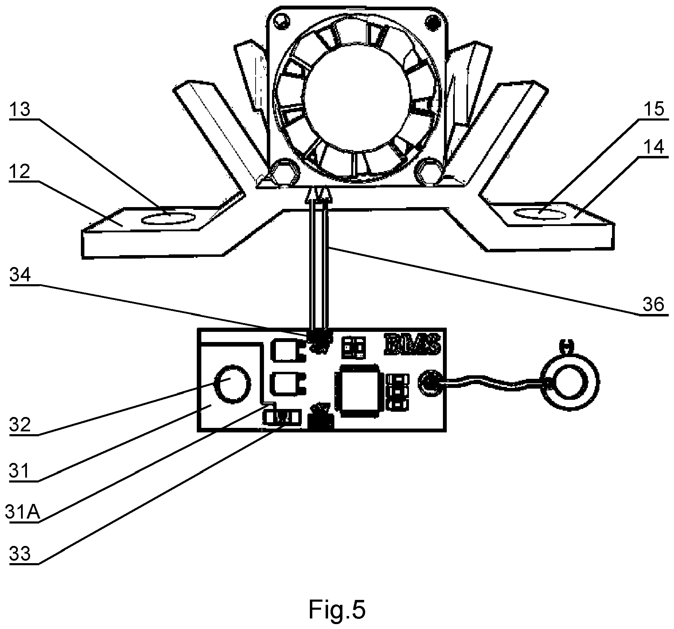

Fig. 5 presents a bus bar with a cooling fan and the battery management system.

### DETAILED DESCRIPTION

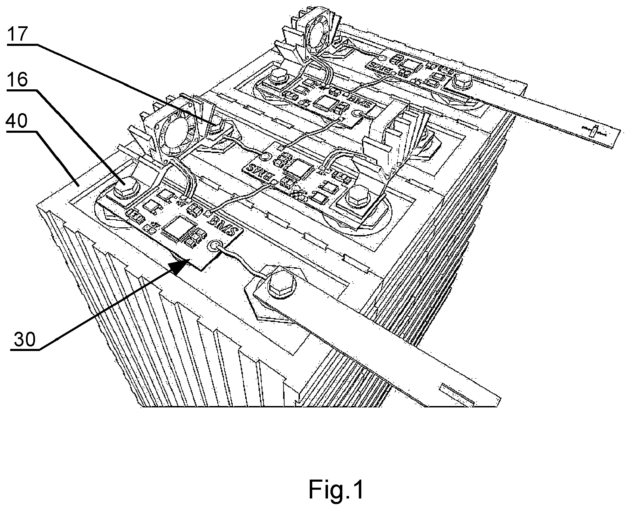

An example configuration of a battery stack is shown in Fig. 1. In the presented embodiment the battery stack comprises a row of multiple batteries 40 which are electrically connected to each other by bus bars 10 such that a positive pole of one battery is connected by means of the bus bar 10 to a negative pole of another adjacent battery 40. Various other configurations can be provided as well, wherein the batteries are arranged in a plurality of parallel rows.

The bus bars have contact feet 12, 14 at their ends, for connecting the bus bar 10 to poles of adjacent batteries to form electrical connection between the poles. In particular, the bus bars 10 comprise a first flat contact foot 12 and a second flat contact foot 14 with openings 13, 14 respectively, for receiving mounting screws 16, 17, which are screwed into the poles of the batteries 40.

A large amount of heat is dissipated from the battery stack via the bus bars, since these elements have the highest thermal conductivity of the battery pack external elements.

In order to provide an improved thermal dissipation of power from the battery stack, at least one bus bar 10 (and preferably, as much as possible, preferably all bus bars 10) has a heat sink with an extended surface 11 which may have a form of cooling fins, ribs or protrusions. The heat sink is coupled with a cooling fan 20.

At least one battery within the battery stack (and, preferably, all batteries) has connected thereto a battery management systems (BMS) 30. The battery management system is responsible for monitoring the battery voltage, current and temperature to protect the battery against overcharging and discharging, estimating the battery operational state, reporting operational status to external devices. For example after reaching a level of full charge in the battery cell, the local BMS bypasses this particular battery cell.

The BMS 30 comprises a contact area 31 with a mounting opening 32. The contact area 31 is mechanically (and therefore also thermally) and electrically coupled to the pole 41 of the battery 40, which is preferably a positive pole, by means of the screw 16 which projects through the opening 13 and through the mounting opening 32. Furthermore the BMS 30 is electrically connected to the other pole of the same battery to which the contact area 31 is coupled, preferably being the negative pole.

The BMS 30 contains a temperature sensor 33 that is thermally coupled with the contact area 31. For example, one of the terminals of the temperature sensor 33 may be soldered to the contact area 31 (unlike standard implementations, wherein the temperature sensor is located on the PCB of the BMS 30 in a region distant from the contact area 31). Due to such positioning of the temperature sensor 33, the temperature sensor measures directly the temperature of the contact area 31, which is substantially equal to the temperature of the battery pole and the bus bar 10, therefore the reaction time of the temperature sensor to changes inside the battery is shortened. The temperature sensor 33 may have a form of a thermistor or a p-n junction sensor. The temperature sensor 33 is configured to be operable with a reference point of the supply voltage positive electrode.

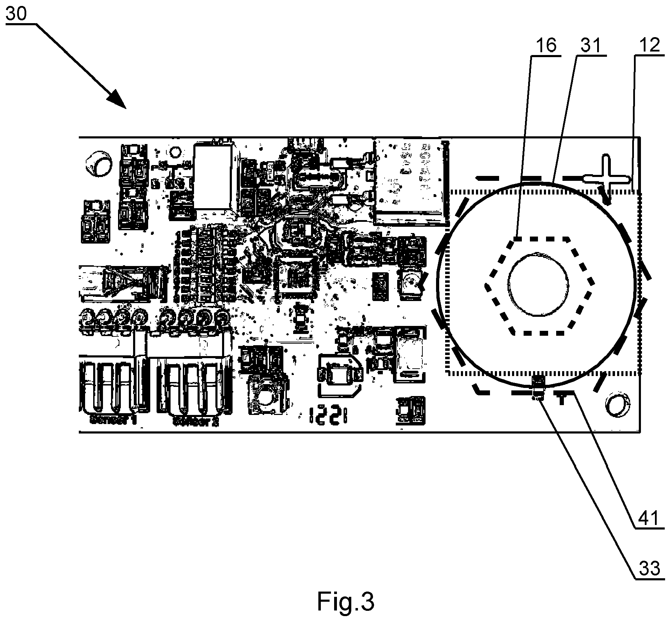

As shown in the embodiment of Fig. 3, the contact area 31 may have a shape of a circle having an area larger than the area of the foot 12 of the bus bar 10 such that the temperature sensor 33 is coupled with the region of the contact area 31 that extends over the area of the foot 12 of the bus bar 10. The surface area of the battery pole 41 may be larger than the surface area of the contact area 31. At the same time the contact area 31 is partially outside the area of the contact foot 12.

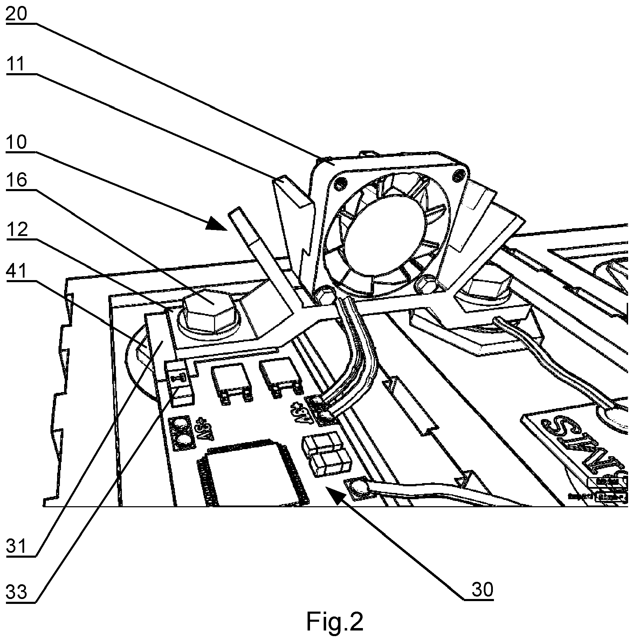

Alternatively, as shown in the embodiment of Fig. 2, the contact area 31 may have a shape of a polygon with a projection 31A extending over the area of the foot 12 of the bus bar 10 such that the temperature sensor 33 is coupled with the projection 31A. When the BMS 30 is coupled to the battery pole 41 and the bus bar 10, the projection 31A extends beyond the contact foot 12 of the bus bar 10 allowing the contact of the temperature sensor 33 to be located on the contact area 31. As a result the sensor is not squeezed by the contact foot 12 and at the same time it is galvanically connected to the contact area 31.

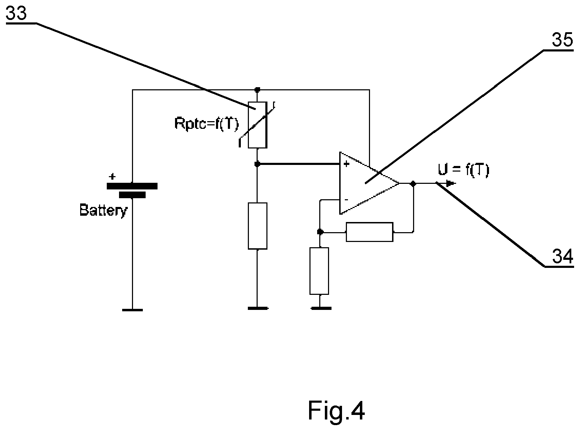

The BMS 30 has a power outlet 34 connected to the cooling fan 20 to power the cooling fan 20. The BMS is configured to deliver power to the cooling fan 20 depending on the temperature measured by the temperature sensor 33. An example circuit for controlling the voltage at the power outlet 34 is shown in fig. 4 - it comprises a transistor switch 35 configured to generate the output voltage (for example, 3V DC) if the temperature measured by the temperature sensor 33 exceeds a threshold (which causes a change in resistance of the temperature sensor 33). The voltage at the power outlet 34 is generated directly from the voltage of the battery to which the BMS is connected, therefore there is no necessity for any external wiring to power the cooling fan 20 other than the wire 36 between the power outlet of the BMS and the cooling fan 20.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A battery stack comprising:
- a plurality of batteries (40) arranged adjacently to each other; and
- bus bars (10) having contact feet (12, 14) at their ends, for connecting the bus bar (10) to poles of the batteries (40); wherein each bus bar (10) connects two poles of two adjacent batteries (40), such as the bus bars (10) form electrical connection between the batteries (40) within the battery stack;
- wherein at least one battery has connected thereto a battery management system (BMS) (30), for controlling and local optimization of battery charging and discharging parameters, coupled via a contact area (31) to one of its poles (41) such that the contact area (31) of the battery management system (30) is located between the pole (41) of the battery and the contact foot (12) of the bus bar (10), and wherein the BMS (30) comprises a temperature sensor (33) thermally coupled with the contact area (31);
- wherein at least one bus bar (10) connected to the battery (40) with the BMS (30) comprises a heat sink having an extended surface (11) coupled with a cooling fan (20), and wherein the BMS (30) has a power outlet (34) connected to power the cooling fan (20) and configured to deliver power to the cooling fan (20) depending on the temperature measured by the temperature sensor (33).

2. The battery stack according to claim 1 wherein the contact area (31) has a shape of a circle having an area larger than the area of the foot (12) of the bus bar (10) such that the temperature sensor (33) is coupled with the region of the contact area (31) that extends over the area of the foot (12) of the bus bar (10).

3. The battery stack according to claim 1 wherein the contact area (31) has a shape of a polygon with a projection (31A) extending over the area of the foot (12) of the bus bar (10) such that the temperature sensor (33) is coupled with the projection (31A).

## Amended claims

### Amended claims in accordance with Rule 137(2) EPC.

1. A battery stack comprising:
- a plurality of batteries (40) arranged adjacently to each other; and
- bus bars (10) having contact feet (12, 14) at their ends, for connecting the bus bar (10) to poles of the batteries (40); wherein each bus bar (10) connects two poles of two adjacent batteries (40), such as the bus bars (10) form electrical connection between the batteries (40) within the battery stack;
- wherein at least one battery has connected thereto a battery management system (BMS) (30), for controlling and local optimization of battery charging and discharging parameters, mechanically coupled via a contact area (31) to one of its poles (41) such that the contact area (31) of the battery management system (30) is located between the pole (41) of the battery and the contact foot (12) of the bus bar (10), and wherein the BMS (30) comprises a temperature sensor (33) thermally coupled with the contact area (31);
- wherein at least one bus bar (10) connected to the battery (40) with the BMS (30) comprises a heat sink having an extended surface (11) mechanically coupled with a cooling fan (20), and wherein the BMS (30) has a power outlet (34) connected to power the cooling fan (20) and configured to deliver power to the cooling fan (20) depending on the temperature measured by the temperature sensor (33).

2. The battery stack according to claim 1 wherein the contact area (31) has a shape of a circle having an area larger than the area of the foot (12) of the bus bar (10) such that the temperature sensor (33) is coupled with the region of the contact area (31) that extends over the area of the foot (12) of the bus bar (10).

3. The battery stack according to claim 1 wherein the contact area (31) has a shape of a polygon with a projection (31A) extending over the area of the foot (12) of the bus bar (10) such that the temperature sensor (33) is coupled with the projection (31A).
